# EUROPEAN PATENT APPLICATION

(11) **EP 2 802 116 A1**
(43) Date of publication of application: **12.11.2014**
(21) Application number: 13167201.6
(22) Date of filing: 09.05.2013
(51) Int. Cl.: H04L 29/06, H04W 12/08, H04W 88/02

(54) **Mobile device security**

(71) Applicant: Vodafone IP Licensing Limited, The Connection Newbury Berkshire RG14 2FN (GB)
(72) Inventor: Babbage, Steven, Newbury, Berkshire RG14 2FN (GB); Barry, Aguibou, Newbury, Berkshire RG14 2FN (GB)
(74) Representative: Boult Wade Tennant

(57) **Abstract**

A method for controlling use of an application APPI on a mobile device 10, the method including determining whether a user security code is active and only allowing execution of the application if the user security code is active. The user security code may be a SIM PIN or a mobile device PIN. The user security code is non-application specific and may be required for some other purpose not related to the application, such as to allow the mobile device 10 to authenticate with the cellular telecommunications network. In this way, the user security code entered for a different purpose may be conveniently used to automatically allow execution of an application.

## Description

### TECHNICAL FIELD

The present invention relates to a method and apparatus for controlling use of application(s) on a mobile device.

### BACKGROUND TO THE INVENTION

Surging data demand driven by the proliferation of smartphones and onset of the use of applications ("apps") on mobile devices is revolutionising the mobile industry. In 2010, smartphones accounted for more than 30 percent of total wireless handset sales. The uptake in smartphone usage is mostly driven by mobile applications, which, while using Internet in the background, offer a personalised experience to the user. A study from the Pew Internet Project illustrates that one in four US adults use mobile applications. Application users had an average of 18 applications on their devices and a median of 10, the study estimates.

The mobile devices generally have several applications installed and running on the mobile device's application processor, and for some of these applications it is also advantageous to check that the right person is running the application. Application-specific passwords or PINs (Personal Identification Numbers) are often used for this, and users may have to remember several username/password pairs and PINs for installed standalone applications. Application designers need to properly implement the management of these credentials in such a way that they cannot be compromised.

### SUMMARY OF THE INVENTION

In one aspect the present invention provides a method for controlling use of an application on a mobile device, the method including determining whether a user security code is active and allowing execution of the application in dependence upon whether the user security code is determined to be active. The method may control use of a plurality of applications, none of which are executable unless the user security code is active. The application(s) may be installed on an application processor.

The user security code in the embodiments to be described is not specific to the application or applications (it is non-application specific). The user security code may be required for a purpose not related to the application or applications.

The user security code may comprise a Personal Identification Number, PIN.

In one embodiment the user security code relates to a Subscriber Identity Module, SIM, (or UICC) associated with the mobile device.

A UICC (Universal Integrated Circuit Chip, referred to as a SIM Card for telecommunications) is a tamper-proof component that can host MNO (Mobile Network Operator) applications. The best known application on the SIM is the Network Access Application (NAA), through which the subscriber authenticates to the mobile network, and the device is permitted to attach to the mobile network. At device start, the user may need to provide a "SIM PIN" (Personal Identifier Code) code to the NAA using the mobile device keypad/touchscreen. When the PIN is entered correctly, the "PIN verified" status remains the same as long as the NAA session is not terminated or the device switched off. The SIM PIN ensures that the legitimate subscriber is using the device, rather than someone else who has picked up the device.

The determining step may include checking whether the user security code is required to be entered to enable a particular function (not related to the application) and checking whether an area protected by the user security code can be accessed. The area may comprise a file or (other) application.

The function may be the authentication with the mobile network in the case that the user security code is a SIM PIN (e.g. to enable the mobile terminal to receive communication services from the mobile telecommunications network). The area protected may be a SIM file (a file stored on the SIM) or SIM application (an application installed on the SIM) that is accessible (only) when the SIM PIN is entered (is active).

According to one embodiment of the invention, applications running on the mobile device's application processor can rely on the SIM/UICC's PIN management capabilities to control the applications' access and execution. This may in principle be done in one of two ways:
- When the application needs to check the user identity, the user is prompted for the SIM PIN. This approach is not particularly convenient for users, although it does have the benefit of allowing several applications in effect to share one PIN.
- When the application needs to check the user identity, it discovers whether the user has already entered the SIM PIN (typically when the device was powered up). This makes the user authentication almost entirely transparent to the user. It is this that is the main subject of one embodiment, which provides a mechanism by which an application can discover whether the SIM PIN has already been entered by the user.

For some use cases, the application on the mobile device may then report to a remote server that the user has been authenticated.

There are several published mechanisms available by which an application might be able to prompt the SIM to ask the user for a PIN:
1. EAP-SIM/AKA. This may be implemented by the application processor but needs online connectivity which is inconvenient when working offline.
2. GBA_U (relying on the USIM) may provide PIN verification but also needs online connectivity.
3. Java JSR-177 offers an API for user credentials management and also a service for PIN verification.
4. Call control by USIM as defined in 3GPP TS 31.111 but this requires the PIN to be once more entered.

However, none of these allow the application to determine whether the SIM PIN was already entered, e.g. at device power-up. They only allow it to ask for a PIN request at the current time, which is less convenient for the user. The known solutions do not determine whether the PIN was already entered.

One of the embodiments grants access to an application running in the mobile device application processor based upon whether the PIN was already successfully or unsuccessfully verified by the SIM/UICC and by reusing existing ETSI Standards as much as possible.

In one embodiment there is provided a mobile device security application that can that contact the SIM/UICC through the mobile device baseband for the purpose of verifying whether the user is already authenticated. The verification may be implemented by one of the following:
1. A method for determining if a particular PIN was successfully or unsuccessfully verified by accessing a SIM/UICC file. This implementation has the advantage that it needs no new functionality on the SIM.
2. A method for determining if a particular PIN was successfully or unsuccessfully verified by accessing a SIM/UICC application.

In one embodiment a combination of two actions is performed:
a) Check whether the SIM requires a PIN to be entered before certain files/applications can be accessed (and that this protection has not been disabled, e.g. to check that the SIM PIN requirement is activated on the SIM); and
b) Check whether one of those files/applications can indeed currently be accessed (which, if (a) is true, implies that the PIN must have been entered by the end user).

The first step (a) may be performed by determining whether PIN verification is enabled by reading the PIN status in the EF_{ARR} (Access Rule Reference Elementary File, a file that contains the access rules and the security conditions to be met to manipulate a file). This file (and access to it) is provided in accordance with the relevant ETSI Standards (see ETSI TS 102 221) and it is required to exist in a multi-application SIM card.

However, reading the PIN status from EF_{ARR} may not be sufficient to determine that the PIN was previously verified because the PIN may not always be required (e.g. if the device is started in flight mode, no PIN verification for reading EF_{ARR} occurs according to the Standards -see ETSI TS 102 221).

So in addition the terminal application needs to read a file or access an application which is PIN protected. If the SIM/UICC can access this file/application then it sends a positive reply to the terminal application or a negative reply if it cannot.

Thus, the following steps are performed:
(a) Read EF_{ARR} to determine whether the SIM requires a PIN to be entered before certain files on the SIM can be read.
(b) Check whether one of the files can be read, or applications accessed, that - if a PIN is indeed required - would only be readable/accessible if the PIN had been entered.

If only (a) is done, this determines a PIN is normally required but it does not determine whether a PIN has actually been entered this time (e.g. the mobile device may be in flight mode or some other mode where a SIM PIN is not required, such as a mode in which there is no cellular network connectivity). If only (b) is done this does not determine whether a PIN was required in the first place (because, if the SIM is set not to require a PIN, the files will be readable / applications accessible without the PIN). Doing (a) and (b) determines that PIN is normally required and that it is currently active.

This implementation may not require any new functionality on the SIM.

The method may include establishing a secure channel between the mobile device and the SIM. This may provide an anti-man-in-the-middle attack component between the application in the mobile device and the SIM/UICC. The endpoint of the secure channel in the SIM/UICC may either be the SIM/UICC platform itself or an application running in the SIM/UICC.

The user security code may be a JavaCard PIN. JavaCard provides PIN-related API services. This embodiment has a specific "PIN Manager application" provisioned in the SIM. The PIN management cycle is performed according to the application. This may be a standalone Javacard applet, a STK applet, or a smartcardwebserver application. This embodiment requires new functionality on the SIM, making it potentially less widely useful.

The PIN may be a local PIN, global PIN or PIN 2 (defined according to the ETSI Standards - see ETSI TS 102 221). There are complex PIN mechanisms relative to the SIM PIN, but the mobile device will know the details from the SIM/UICC. The mobile device is informed about the security attribute in a response from a SELECT or STATUS command. In particular the mobile device will know which EF_{ARR} record number should be used for performing PIN verification. The mobile device can know then which PIN is to be used for performing PIN verification. ETSI Standard TS 102 221 specifies access condition level coding which matches with a particular PIN usage. For instance a level 1 key reference is used on applications that share the same access condition; this one is mapped with the PIN. A level 2 key reference is only valid within the ADF/DF (Application Dedicated File/Dedicated File) where it is indicated (Application PIN behaviour); this one is mapped with the PIN2 (Local PIN behaviour).

The user security code may relate to a particular SIM, the method including only allowing execution of the application when the particular SIM is associated with the mobile device. According to this embodiment, the phone OS may perform a check that the correct SIM is inserted before exposing application data to the end user. According to this embodiment, if an alternative SIM is inserted in a mobile device the application data shall be kept hidden.

The user security code may relate to the mobile device (rather than the SIM). Some customers use a phone-based PIN (or other access code), rather than a SIM-based PIN, to unlock their devices. This has been possible with many phone models for a long time, but has become more common in practice with the increasing use of smartphones. For a user who uses a phone-based PIN in this way, it is rather less likely that he/she will also use his/her SIM PIN.

From the point of view of an application determining whether or not the user has recently authenticated him/herself, either a SIM PIN or a phone PIN can be used. So an embodiment may accommodate both: consider the user to be authenticated if either the SIM PIN is used and has been entered (as already described), or the phone PIN is enabled and has been entered, or both.

The user security code may be required to unlock a feature of the mobile device, such as a display and/or keyboard of the mobile device. A PIN could be verified for days or even months. So the PIN verification check may be considered rather weak. Many users hardly ever switch their mobile device off, and only use the device lock screen. This depends which PIN is currently checked and what are the conditions to reset the security context of a file or an application; this can either be e.g. at SIM/UICC refresh/SIM removal or when another file application/file with a different security context is being selected. One enhancement for the phone lock implementation is to verify the SIM PIN to unlock the phone keyboard and/or screen; this would assure that the PIN verification is fresh.

The method may include determining when the user security code was most recently entered and selectively requesting re-entry of the user security code. If the embodiment accommodates both SIM PIN and phone PIN, as previously described, then entry of the phone PIN to unlock a device lock screen would typically constitute the most recent PIN entry.

It is noted above that a user could enter a SIM PIN and then remain "authenticated" for a very long time, if he/she infrequently turns off the phone. An implementation incorporating the invention also includes the option to prompt the user to enter the SIM PIN at a particular instance - for example, using one of the several known mechanisms available by which an application might be able to prompt the SIM to ask the user for a PIN immediately, such as:
1. EAP-SIM/AKA if implemented by the application processor.
2. GBA_U (relying on the USIM).
3. Java JSR-177, which offers an API for user credentials management (a PKI model may be used), and also a service for PIN verification.
4. Call control by USIM as defined in 3GPP TS 31.111.

This loses the user-friendliness of not having to enter the PIN again. However, requiring re-entry of a PIN may be optional, depending on the requirements of the particular application. A mechanism may therefore be provided with the options of either using the fact that the PIN was entered previously or prompting for it right now.

Optionally, the mobile device may track how recently the SIM PIN was entered. A phone-based mechanism may after boot, periodically, or on certain triggers check whether the PIN has been entered. It may keep a record of the oldest time since last boot that it knows the user to have entered the SIM PIN; this will give a good indication of how "old" the PIN entry is, and this in turn could be used by the mechanism to decide "what the PIN entry is worth" in terms of user authentication. As an example:
- if the PIN entry appears to have been done today, the mechanism may consider this to be good enough;
- if the PIN entry appears to have been done more than a day ago then the mechanism may decide to prompt the user for the PIN again.

This requires the mechanism to run either in the background or at boot or both - not just at the time when an application needs to know whether or not the user has been authenticated.

The embodiment of the invention may enhance the mobile application security. At the moment in the NFC (Near Field Communication) space there are more and more companion applications that store an application PIN on the UICC, and with e.g. Visa and Mastercard they make this function shareable across different Visa cards or Mastercards installed on the SIM. The present invention is applicable to many more cases than just the payment use cases.

The user security code may relate to the mobile device, and, if the user security code is determined to be inactive, the method may further include determining whether a further user security code is active, which further user security code relates to a SIM associated with the mobile device, and then allowing execution of the application in dependence upon whether the further user security code is determined to be active.

In another aspect the present invention provides apparatus for controlling use of an application on a mobile device. The apparatus may be incorporated into the mobile device.

### BRIEF DESCRIPTION OF THE DRAWINGS

For a better understanding of the present invention embodiments will now be described by way of example, with reference to the accompanying drawings, in which:
Figure 1 illustrates a high level 3G (UMTS) network architecture;
Figure 2 illustrates a high level 4G (LTE/SAE) network architecture;
Figure 3 illustrates elements of a mobile device and SIM in accordance with the invention;
Figures 4A and 4B are a flow chart showing the procedures performed to authenticate a mobile device with a core network;
Figures 5A and 5B are a flow chart showing the procedures performed to control access to an application in accordance with a first embodiment of the invention;
Figures 6A and 6B are a flow chart showing the procedures performed to control access to an application according to a second embodiment of the invention;
Figures 7A and 7B are a flow chart showing the procedures performed to control access to an application according to a third embodiment of the invention;
Figure 8 is a flow chart showing the procedures performed to control access to an application according to a fourth embodiment of the invention; and
Figure 9 is a flow chart showing the procedures performed to control access to an application according to a fifth embodiment of the invention.

In the Figures like elements/steps are generally designated with the same reference numeral/letter.

### DETAILED DESCRIPTION OF EMBODIMENTS OF THE INVENTION

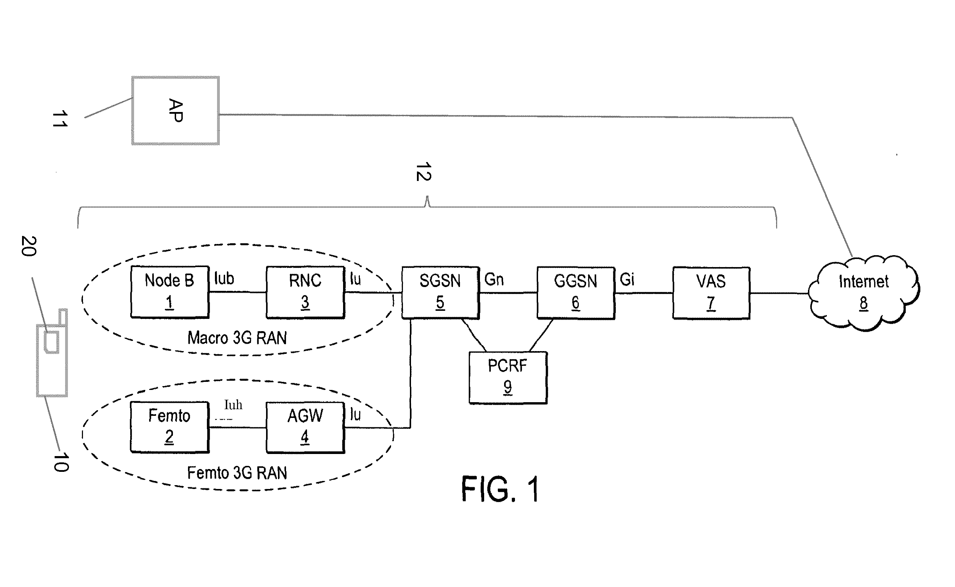

Key elements of a 3G mobile telecommunications network, and its operation, will now briefly be described with reference to Figure 1.

Each base station (e.g. Node B 1 and Femto 2) corresponds to a respective cell of the cellular or mobile telecommunications network 12 and receives calls from and transmits calls to a mobile terminal 10 in that cell by wireless radio communication in one or both of the circuit switched or packet switched domains.

The mobile terminal 10 may be any portable telecommunications device, including a handheld mobile telephone, a smartphone, a tablet computer, a personal digital assistant (PDA) or a laptop computer equipped with a network access datacard. The mobile terminal 10 can be considered to comprise two main parts: a radio frequency part (radio unit) and a baseband part. The radio frequency part handles the transmission of radio frequency signals between the antenna of the mobile terminal 10 and the nodeB 1 or Femto 2, and for converting radio frequency signals into digital baseband signals (and vice versa). The baseband part is responsible for controlling and managing the transmission of the baseband signals to other components of the mobile terminal 10.

The nodeB 1 or Femto 2 can be considered to comprise two main parts: a radio frequency part (radio unit) and a baseband part. The radio frequency part handles the transmission of radio frequency signals between the antenna of the nodeB 1 or Femto 2 and the mobile terminal 10, and for converting radio frequency signals into digital baseband signals (and vice versa). The baseband part is responsible for controlling and managing the transmission of the baseband signals to other components of the mobile telecommunications network.

In a macro 3G network, the Radio Access Network (RAN) comprises Node Bs and Radio Network Controllers (RNCs). The Node B is the function within the 3G network that provides the physical and transport radio link between the mobile terminal (User Equipment, UE) and the network. The Node B performs the transmission and reception of data wirelessly across the radio interface, and also applies the codes that are necessary to describe channels in a CDMA system. The RNC is responsible for control of the Node Bs that are connected to it. The RNC performs Radio Resource Management (RRM), some of the mobility management functions and is the point where encryption is done before user data is sent to and from a mobile terminal. The RNC connects to the Circuit Switched Core Network through a Media Gateway (MGW) and to an SGSN (Serving GPRS Support Node) 5 in the Packet Switched Core Network. In Figure 1, Node B 1 is controlled by RNC 3 across the lub interface. An RNC may control more than one Node B.

Figure 1 also illustrates a Femto 3G RAN, with Femto 2 operating as the base station. Femto 2 is connected to an Access Gateway (AGW) (a.k.a Concentrator) 4 via an luh interface. Femto is an abbreviation of "femto-cell", and many other different names have been used to refer to the same apparatus.

The radio link between the Femto 2 and the mobile terminal uses the same cellular telecommunication transport protocols as Node B 1 but with a smaller range - for example 25m. The Femto 2 appears to the mobile terminal 10 as a conventional base station, so no modification to the mobile terminal is required for it to operate with the Femto 2. The Femto 2 performs a role corresponding to that of Node B 1 in the macro 3G RAN.

The Femto 2 may be configured to serve a Wireless Local Area Network (WLAN) located in a home or office, in addition to GSM/UMTS/LTE networks. The WLAN could belong to the subscriber of the mobile terminal, or be an independently operated WLAN. The owner of Femto 2 can prescribe whether it is open or closed, whereby an open femto is able to carry communications from any mobile device in the GSM/UMTS/LTE network, and a closed femto is only able to carry communications from specific pre-assigned mobile devices.

Conventionally, in a 3G network (macro or Femto), the RANs are controlled by a mobile switching centre (MSC), not shown, and an SGSN (Serving GPRS Support Node) 5 of the core network. The MSC supports communications in the circuit switched domain, whilst the SGSN 5 supports communications in the packet switched domain - such as GPRS data transmissions. The SGSN 5 is responsible for the delivery of data packets from and to the mobile terminals within its geographical service area. It performs packet routing and transfer, mobility management (attach/detach and location management), logical link management, and authentication and charging functions. A location register of the SGSN 5 stores location information (e.g., current cell, current VLR) and user profiles (e.g., IMSI, address(es) used in the packet data network) of all mobile terminals registered with this SGSN.

Communications between the AGW 4 and the SGSN 5 are preferably IP based communications, and may be, for example, transmitted over a broadband IP network. Further, the connection between the Femto and the AGW 4 may use the PSTN (Public Switched Telephone Network). Typically a DSL cable connects the AGW 4 to the PSTN, and data is transmitted therebetween by IP transport/DSL transport. The Femto 2 or AGW 4 converts the cellular telecommunications transport protocols used between the mobile terminal 10 and the Femto 2 to the appropriate IP based signalling.

The femto 2 may be connected to the AGW 4 by means other than a DSL cable and the PSTN network. For example, the femto 2 may be connected to the AGW 4 by a dedicated cable connection that is independent of the PSTN, or by a satellite connection.

The SGSN 5 is in communication with the GGSN 6 (Gateway GPRS Support Node) across the Gn interface. The GGSN is responsible for the interworking between the GPRS network and external packet switched networks, e.g. the Internet. The GGSN enables the mobility of mobile terminals in the networks. It maintains routing necessary to tunnel the Protocol Data Units (PDUs) to the SGSN 5 that service a particular mobile terminal. The GGSN 6 converts the GPRS packets coming from the SGSN 5 into the appropriate packet data protocol (PDP) format (e.g., IP or X.25) and sends them out on the corresponding packet data network. In the other direction, PDP addresses of incoming data packets are converted to the mobile network address of the destination user. The readdressed packets are sent to the responsible SGSN 5. For this purpose, the GGSN 6 stores the current SGSN 5 address of the user and their profile in its location register. The GGSN 6 is responsible for IP address assignment and is the default router for the connected mobile terminal. The GGSN 6 also performs authentication and charging functions. Other functions include IP Pool management and address mapping, QoS and PDP context enforcement.

In turn the GGSN 6 may route data via any applicable Value Added Service (VAS) equipment 7, before data is forwarded towards its intended destination via the Internet 8. As an example of the functionality of the VAS equipment, the traffic may be inspected for adult content before reaching the end-user if this user is under 18 years of age.

For billing purposes in particular, a PCRF (Policy and Charging Rules Function) apparatus 9 is also provided, in communication with both the SGSN 5 and the GGSN 6.

The SGSN 5, GGSN 6, VAS 7 and PCRF apparatus 9 comprise the core network of the mobile telecommunications network 12.

Additionally a WLAN access point (AP) 11 may be provided to enable the mobile terminal 10 (with WLAN communication capability) to access the internet 8 independently of the mobile telecommunications network 12 (including the core thereof). The WLAN communications may be in accordance with a relevant Standard, such as IEEE 802.11.

Traffic in a mobile telecommunications network can be considered to be separated into "control plane" signalling and "user plane signalling". The control plane performs the required signalling, and includes the relevant application protocol and signalling bearer, for transporting the application protocol messages. Among other things, the application protocol is used for setting up the radio access bearer and the radio network layer. The user plane transmits data traffic and includes data streams and data bearers for the data streams. The data streams are characterised by one or more frame protocols specific for a particular interface. Generally speaking, the user plane carries data for use by a receiving terminal - such as data that allow a voice or picture to be reproduced - and the control plane controls how data are transmitted.

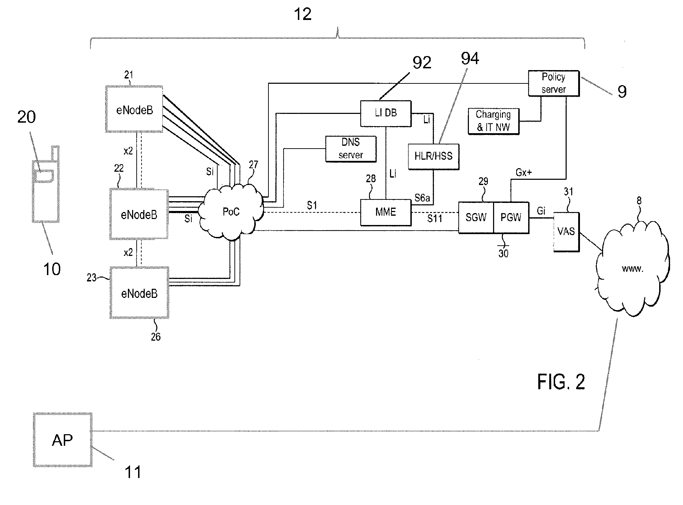

Figure 2 shows a high level description of the architecture of a LTE/SAE (4G) macro network.

The LTE/SAE network 12 includes eNode Bs 21,22,23 which make up the RAN. The eNode Bs effectively combine the functionality of the node B and the RNC of the 3G network. These eNodeBs are the network components which communicate with the mobile communication devices (e.g. 10). The eNodeBs are arranged in groups and each group controlled by a Mobility Management Entity (MME) 28 and a User Plane Entity (UPE), not shown.

The MME 28 performs many of the mobility functions traditionally provided by the 3G SGSN. The MME 28 terminates the control plane with the mobile device 10. It is responsible for terminating NAS (Non Access Stratum) Signalling such as MM (Mobility Management) and SM (Session Management) information as well as coordinating Idle Mode procedures. Other responsibilities of the MME include gateway selection inter MME 28 Mobility and authentication of the mobile device.

The UPE manages protocols on the user plane such as, storing mobile terminal contexts, terminating the Idle Mode on the user plane, and PDP context encryption.

Each of the eNodeBs 21,22, 23 is connected to the mobile network core through a Point of Concentration (PoC) 27. All traffic from the eNodeBs 21, 22, 23 which is to be routed through the core mobile network is routed to the PoC 27. This includes both user plane and control plane data. On the control plane level, the PoC 27 routes data to and from the Mobility Management Entity (MME) 28 across the S1 interface. Control data is also sent to and from other core network components, including the Lawful Interceptor Database (LI DB) 92, DNS Server, Policy Server (including Charging rules and IT Network) 9 and Home Location Register/Home Subscriber Server (HLR/HSS) 94 (which contains subscriber and device profile and state information).

User plane data, on the other hand, is transmitted by the PoC 27 to the Serving GateWay (SGW) 29 and then to the Packet data network GateWay (PGW) 30. The SGW and PGW are typically separate entities, with the SGW being a data plane element whose primary function is to manage user-plane mobility and data being transferred between the eNodeBs and the PDN Gateway (PGW). From the PGW, data is routed across a Value Added Service (VAS) node 31 to the Internet 8. In LTE/SAE this is the standard data path from the mobile terminals to the Internet.

Each subscriber to the network is provided with a smart card or SIM 20 which, when associated with the user's mobile terminal 10 identifies the subscriber to the network. The SIM card is pre-programmed with a unique identification number, the "International Mobile Subscriber Identity" (IMSI) that is not visible on the card and is not generally known to the subscriber. The subscriber is issued with a publicly known number, that is, the subscriber's telephone number, by means of which callers initiate calls to the subscriber. This number is the MSISDN.

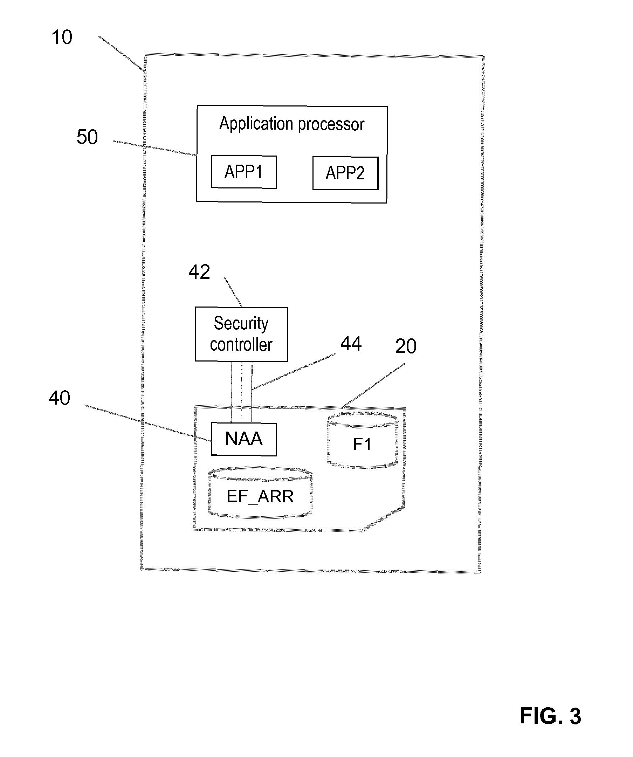

Figure 3 shows a SIM 20 in more detail.

The UICC (Universal Integrated Circuit Chip, called SIM Card for telecommunications) is a tamper-proof component that can host MNO (Mobile Network Operator) applications. The best known application on the SIM 20 is the Network Access Application (NAA) 40, through which the subscriber authenticates to the mobile network, and the device 10 is permitted to attach to the mobile network. At device start, the user may need to provide a PIN ("SIM PIN") to the NAA 40. When the PIN is entered correctly, the "PIN verified" status remains the same as long as the NAA session is not terminated or the device switched off.

The NAA 40 application residing in the SIM/UICC 20 which holds a subscriber identity and an authentication algorithm and provides the access to a network.

NAA can be:
- a USIM application, as defined in 3GPP TS 31.102, which can reside only on a 3G platform;
- a SIM application, as defined in 3GPP TS 51.011, which can reside either on a 3G or a 2G platform;
- a TSIM application, as defined in TS 100 812, which can reside only on a 3G platform;
- a ISIM application, as defined in 3GPP TS 31.103, which can reside only on a 3G platform;
- a RUIM application, as defined in TIA/IS-820-A, 3GPP2 C.S0023-0, which can reside on a 2G platform; or
- other applications residing on a 3G platform, a 2G platform and or a 4G platform.

The SIM 20 also includes a file called EF_{ARR} (Access Rule Reference). This Elementary File, EF, contains the access rules for certain files located in the UICC, such as file F1. If the security attribute tag '8B' is indicated in the File Control Parameters (FCP) it contains a reference to a record in this EF_{ARR} file.

If the SIM 20 cannot access EF_{ARR}, any attempt to access a file with access rules indicated in this EF_{ARR} shall not be granted.

The EF_{ARR} file may contain one or more records containing access rule information according to the reference to expanded format as defined in ISO/IEC 7816-9. Each record represents an access rule.

The network includes a home location register (HLR) which, for each subscriber to the network, stores the IMSI and the corresponding MSISDN together with other subscriber data, such as the current or last known MSC or SGSN of the subscriber's mobile terminal.

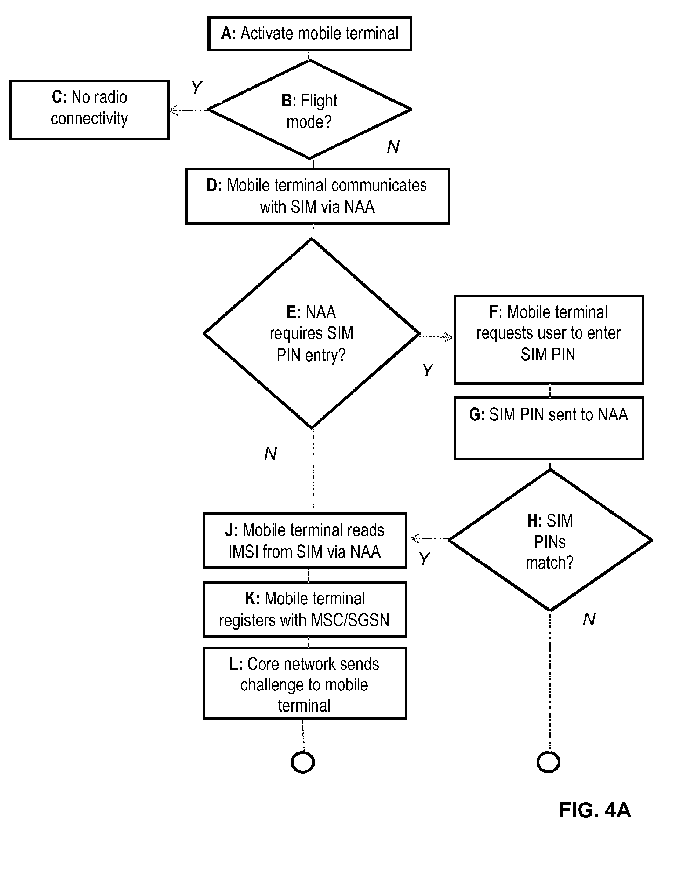

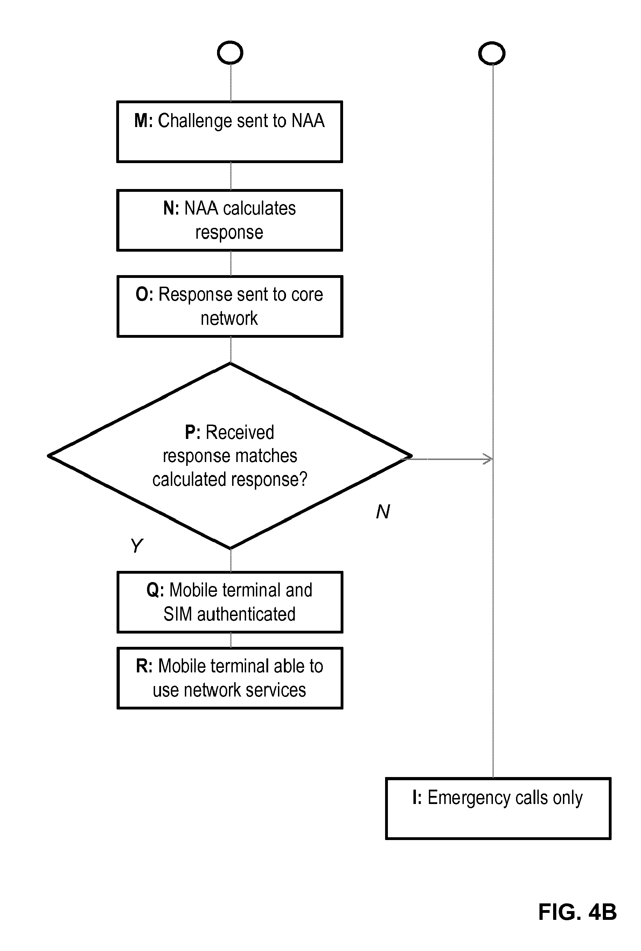

The authentication operation of the SIM in relation to a 3G network will now be briefly described with reference to Figures 4A and 4B but the principles also apply to a 4G network.

When mobile terminal 10 is activated **(step A)** it is determined whether the mobile terminal 10 is in "flight mode" **(step B).** Flight mode is a user-selectable mode in which the radio functions of the mobile terminal are disabled. Thus, in the flight mode the radio frequency part of the mobile terminal 10 is disabled. If it is determined that the mobile terminal 10 is in flight mode, then no further authentication steps are performed as the mobile terminal is unable to connect to the core network, and the process ends at **step C.**

On the other hand, if the flight mode is not enabled, the mobile terminal 10 then communicates with the NAA 40 of its SIM 20 in order to attempt to authenticate with the network core **(step D).**

On receipt of the authentication request from the mobile terminal 10, the NAA 40 identifies whether a SIM PIN is required to allow connectivity to the core network **(step E).** If a SIM PIN is required the NAA 40 sends a request to the mobile terminal 10 to obtain the SIM PIN from the user. At **step F** the graphical user interface (GUI) of the mobile terminal 10 is used to prompt the user to enter the PIN, which the user does typically by using the physical keypad of the mobile terminal 10 or the touch screen of the mobile terminal 10. At **step G** the SIM PIN entered by the user is sent from the mobile terminal 10 to the NAA 40 of the SIM 20. At **step H** it is determined whether the SIM PIN provided by the user matches the SIM PIN known to the NAA 40. If the SIM PINs do not match, the user may be given an opportunity to re-enter the SIM PIN for a predetermined number of times (typically three), and steps F, G and H are repeated to allow this. If after the predetermined number of attempts the SIM PINs do not match, then the mobile terminal 10 enters an emergency calls only state so that normal core network services are not available to the user but the ability to make emergency calls is retained **(step I).**

On the other hand, if at step H it is determined that the SIM PIN entered by the user matches the SIM PIN known to the NAA 40, then the process continues to **step J.** Step J is also performed directly after step E if the NAA 40 does not require SIM PIN entry (and thus the process goes from step E directly to step J).

At step J the mobile terminal reads the IMSI from the SIM 20 via the NAA 40. The IMSI is transmitted to the Node B 1/ Femto 2 associated with the particular cell in which the terminal 10 is located. In a traditional network, the NodeB 1/Femto 2 then transmits this IMSI to the MSC/SGSN 5 with which the NodeB 1/Femto 2 is registered. In a network using the functionality described in 3GPP TS 23.236, the Node B 1/Femto 2 follows prescribed rules to select which MSC/SGSN 5 to use, and then transmits this IMSI to the selected MSC/SGSN.

The MSC/SGSN 5 now accesses the appropriate storage location in the HLR present in the core network and extracts the corresponding subscriber MSISDN and other subscriber data from the appropriate storage location, and stores it temporarily in a storage location in a visitor location register (VLR) or in the SGSN itself. In this way, therefore the particular subscriber is effectively registered with a particular MSC/SGSN, and the subscriber's information is temporarily stored in the VLR associated with that MSC or in the SGSN itself **(step K).**

When the HLR is interrogated by the MSC/SGSN 5 in the manner described above, the HLR additionally performs an authentication procedure for the mobile terminal 10. The HLR transmits authentication data to the MSC/SGSN 5 in "challenge" and "response" forms. Using this data, MSC/SGSN 5 passes a "challenge" to the mobile terminal 10 through base Node B 1/Femto 2 **(step L).** Upon receipt of this data, the mobile terminal 10 passes this data to the NAA 40 of its SIM 20 **(step M),** which produces a "response" **(step N).** This response is generated using a cryptographic algorithm on the NAA 40 of the SIM and a unique key Ki on the NAA 40 of the SIM 20. The response is transmitted back to the MSC/SGSN 5 **(step O)** which checks it against its own information for the subscriber which checks it against information that it has obtained for that subscriber from the HLR in order to complete the authentication process. If it is determined that the response from the mobile terminal 10 is as expected **(step P),** the mobile terminal 1 is deemed authenticated **(step Q),** and the mobile terminal 10 is then able to use network services **(step R).** At this point the MSC/SGSN 5 requests subscription data from the HLR. The HLR then passes the subscription data to the VLR/SGSN 5.

If at step P the received response does not match the response calculated by the HLR, then the mobile terminal 10 is not authenticated and the process goes to step I.

The authentication process may be repeated at regular intervals while the mobile terminal 10 remains activated and can also be repeated each time the mobile terminal makes or receives a call, if required. This authentication process confirms the identity of the user to the network, so the user can be charged for telecommunications services.

As shown in Figure 3, the mobile device 10 also has several applications APP1, APP2 installed and running on application processor 50, and for some of these applications (APP1) it is also necessary to check that the right person is running the application.

Conventionally, application-specific passwords or PINs are often used for this, and users may have to remember several username/password pairs or PINs for installed standalone applications. Application designers need to properly implement the management of these credentials in such a way that they cannot be compromised, and this adds complication and cost.

In accordance with an important feature of embodiments of the invention, the security controller 42 in the mobile terminal 10 communicates with the NAA 40 of the SIM 20. The security controller 42 handles requests for user authentication from the application processor 50.

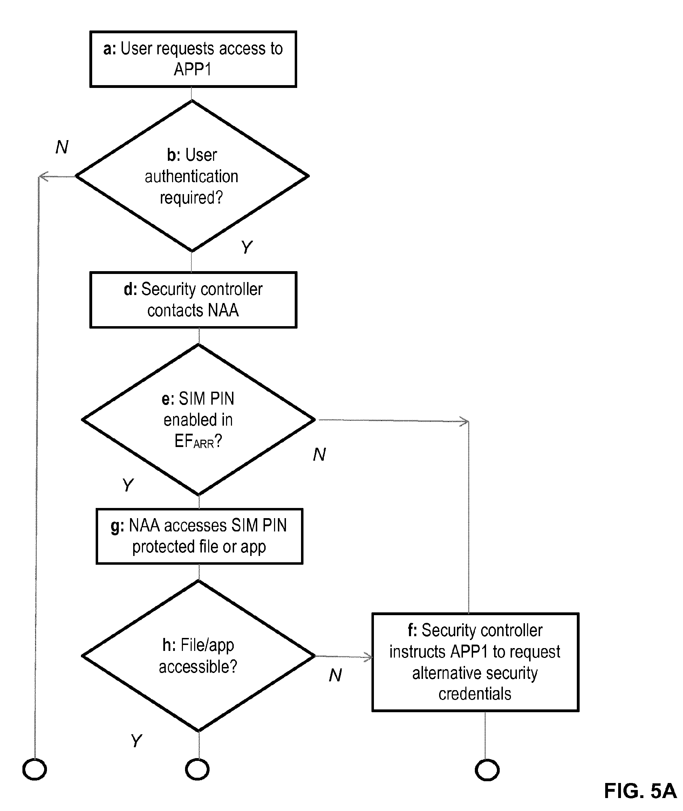

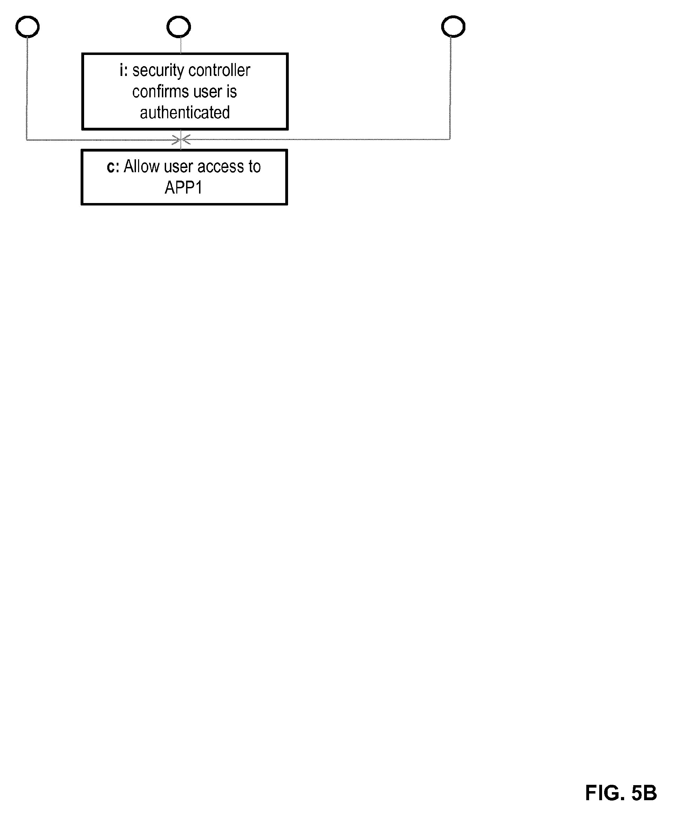

A first embodiment of the invention will now be described with reference to the flow chart of Figures 5A and 5B, which shows the procedures performed to authenticate a user to access the application APP1.

At **step a,** a user of the mobile terminal 10 requests access to application APP1, for example, using the GUI of the mobile terminal 10. This request is passed to the application processor 50. The application processor 50 then determines whether the application APP1 requires the user authentication before access to the application is granted **(step b).** It should be understood that for some applications no user authentication is necessary. For example, such an application might be an application which provides information about the local weather. On the other hand, some applications, such as a banking application, allow access to highly sensitive personal data, and therefore access to the application should be controlled.

If the application APP1 is of the type where access is not restricted, then at **step c** the user is allowed access to the application APP1.

On the other hand, if it is determined at step b that user authentication is required, the security controller 42 contacts the NAA 40 of the SIM 20 to determine whether the user is authenticated **(step d).** Optionally, the security controller 42 may establish a secure communication channel 44 between itself and the SIM 20. The end point of the secure channel in the SIM 20 may either be the SIM 20 platform itself or the NAA 40. The secure channel 44 provides protection against a man-in-the-middle attack by encrypting communications between the security controller 42 and the SIM 20. The security controller 42 reads the file EF_{ARR} and determines whether the SIM PIN is enabled **(step e).**

If the SIM PIN is not enabled, then at **step f** the security controller 42 instructs the application APP1 to request alternative security credentials. The security credentials may be entered in the conventional way - for example, by prompting the user via the GUI of the mobile terminal 10 to enter a user name and password specific to the particular application APP1. If the security credentials are correct, then at step c the user is allowed access to the application APP1.

On the other hand, if it is determined at step e that the SIM PIN is enabled, then at **step g** the security controller 42 accesses a file (e.g. F1) or application on the SIM 20 which is protected by the SIM PIN.

At **step h** it is determined whether that file/application is accessible. For a SIM which is SIM PIN enabled, such a file/application will be only accessible when the SIM PIN has been entered by the user (for example on start-up of the mobile terminal 10 in the conventional manner). If the SIM PIN is enabled but has not been entered, then the file/application will not be accessible. If it is determined at step h that the file is not accessible then the NAA advises the security controller that it is not able to authenticate the user and, again, the security controller instructs the application APP1 to request alternative security credentials in the manner described above (step f).

On the other hand, if the file/application is accessible, this indicates that the SIM PIN is active and has been entered by the user, and this is indicative of the user being authenticated by having previously entered the correct SIM PIN. The SIM 20 then issues a reply, indicating that the file/application is accessible. **Step i** is then performed at which the security controller 42 deduces from the reply that the user is authenticated.

**Step c** is then performed which allows the user to access the application APP1.

In the context of step h it should be understood that there is another possibility: that the SIM is not SIM PIN enabled, in which case the files and/or applications on the SIM will not require the SIM PIN to be entered to make them readable. That is, the files and/or applications can be read without any PIN being entered. However, at step h it is not assessed whether files and/or applications which do not require a PIN for access are readable because this possibility is excluded by step e which forces the applications APP1 to request alternative security credentials if the SIM is not SIM PIN enabled.

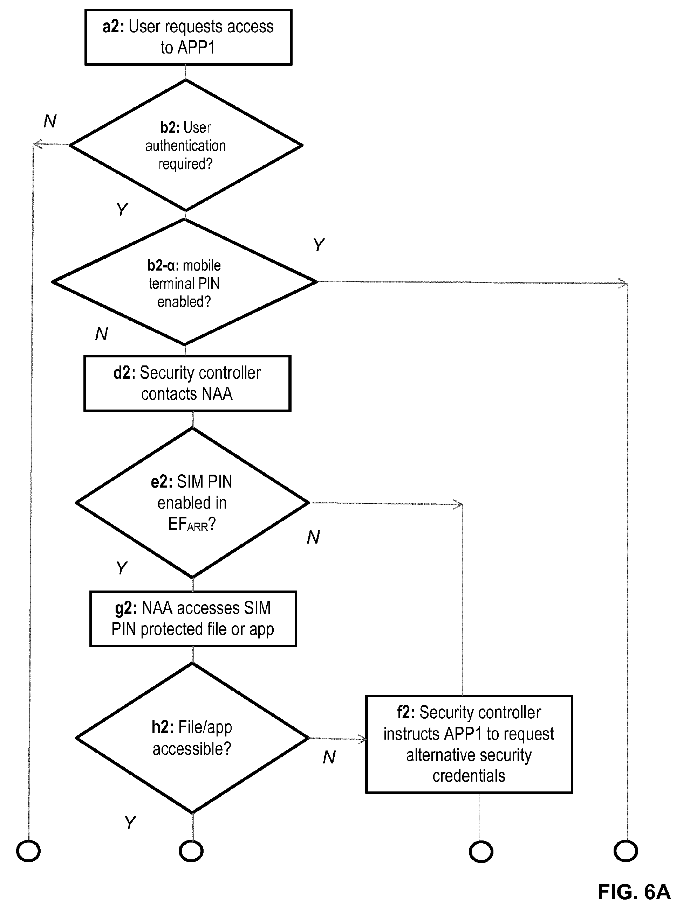

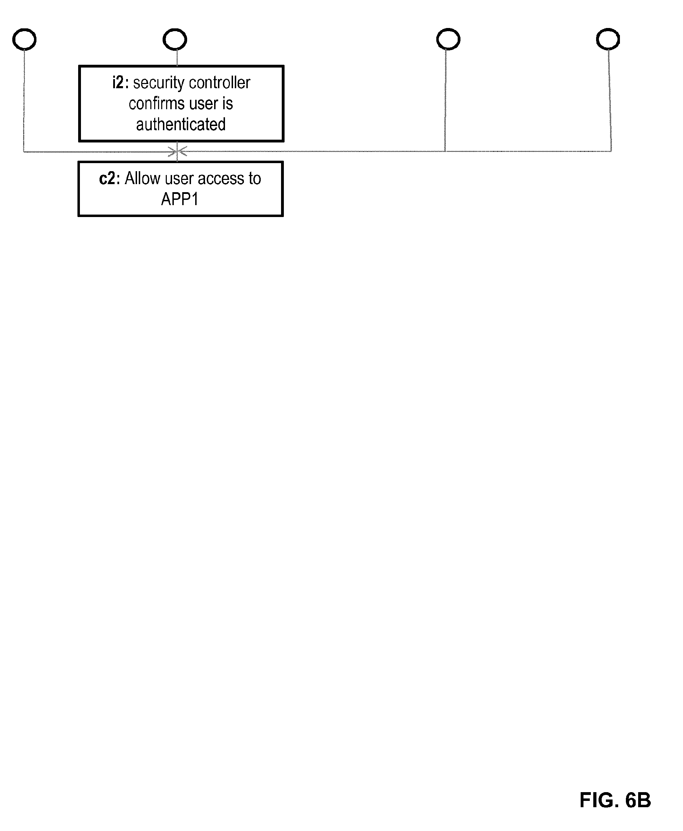

Figures 6A and 6B show a flow chart of the procedures performed to authenticate a user to access the application APP1 according to a second embodiment of the invention. In the second embodiment the letter used to reference a step indicates that that step generally corresponds to the step of the first embodiment (shown in Figures 5A and 5B) as is designated with the same letter.

At **step a2** the user of the mobile terminal 10 requests access to application APP1, in the same way as step a of the first embodiment. This request is passed to the application processor 50. The application processor 50 then determines at **step b2** whether the application APP1 requires the user authentication before access to the application is granted, in the same manner as step b of the first embodiment.

If the application APP1 is of the type where access is not restricted, then at **step c2** the user is allowed access to the application APP1 immediately after step b2.

On the other hand, if it is determined at step b2 that user authentication is required, then, at **step b2-**α, the application processor 50 determines whether the mobile terminal 10 is PIN enabled. This is in contrast to the SIM PIN of the first embodiment. The mobile terminal PIN is administered by the mobile terminal (for example, by the security controller 42). The mobile terminal may require the PIN to be entered to use mobile terminal services and/or to access particular files and applications.

If it is determined at step b2-α that the mobile terminal PIN is enabled, then at **step c2** the user is allowed access to the application APP1 immediately after step b2.

On the other hand, if the mobile terminal PIN is not enabled, the security controller 42 is not able to immediately authenticate the user and allow access to APP1, and the security controller 42 contacts the NAA 40 of the SIM 20 to determine whether the user is authenticated **(step d2).** Optionally, the security controller 42 may establish a secure communication channel 44 between itself and the SIM 20. The end point of the secure channel in the SIM 20 may either be the SIM 20 platform itself or the NAA 40. The secure channel 44 provides protection against a man-in-the-middle attack by encrypting communications between the security controller 42 and the SIM 20. The security controller 42 reads the file EF_{ARR} and determines whether the SIM PIN is enabled **(step e2).**

If the SIM PIN is not enabled, then at **step f2** the security controller 42 instructs the application APP1 to request alternative security credentials. The security credentials may be entered in the conventional way - for example, by prompting the user via the GUI of the mobile terminal 10 to enter a user name and password specific to the particular application APP1. If the security credentials are correct, then at step c2 the user is allowed access to the application APP1.

On the other hand, if it is determined at step e2 that the SIM PIN is enabled, then at **step g2** the security controller 42 accesses a file (e.g. F1) or application on the SIM 20 which is protected by the SIM PIN.

At **step h2** it is determined whether that file/application is accessible. For a SIM which is SIM PIN enabled, such a file/application will be only accessible when the SIM PIN has been entered by the user (for example on start-up of the mobile terminal 10 in the conventional manner). If the SIM PIN is enabled but has not been entered, then the file/application will not be accessible. If it is determined at **step h2** that the file is not accessible then the NAA advises the security controller that it is not able to authenticate the user and, again, the security controller instructs the application APP1 to request alternative security credentials in the manner described above (step f2).

On the other hand, if the file/application is accessible, this indicates that the SIM PIN is active and has been entered by the user, and this is indicative of the user being authenticated by having previously entered the correct SIM PIN. The SIM 20 then issues a reply, indicating that the file/application is accessible. **Step i2** is then performed at which the security controller 42 deduces from the reply that the user is authenticated.

**Step c2** is then performed which allows the user to access the application APP1.

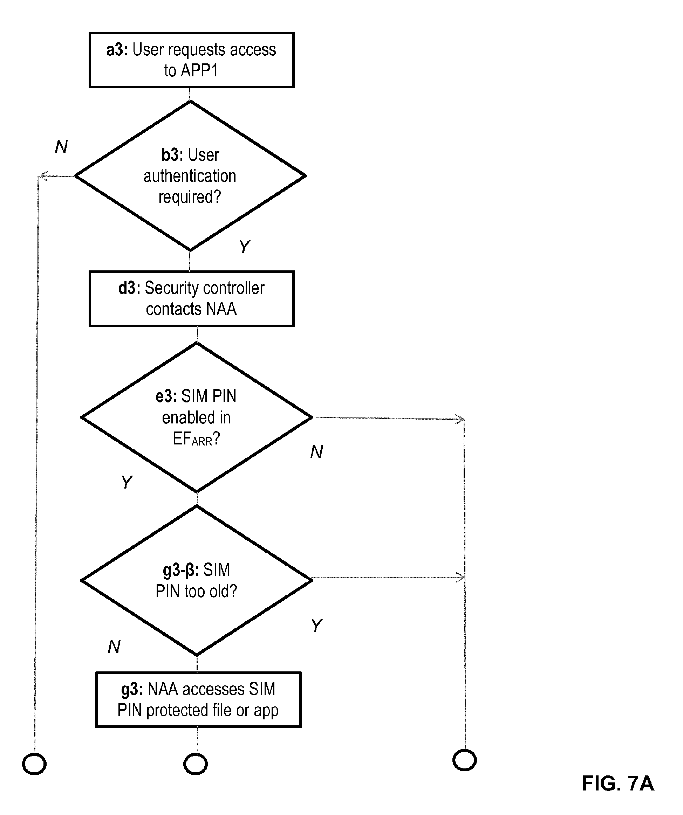

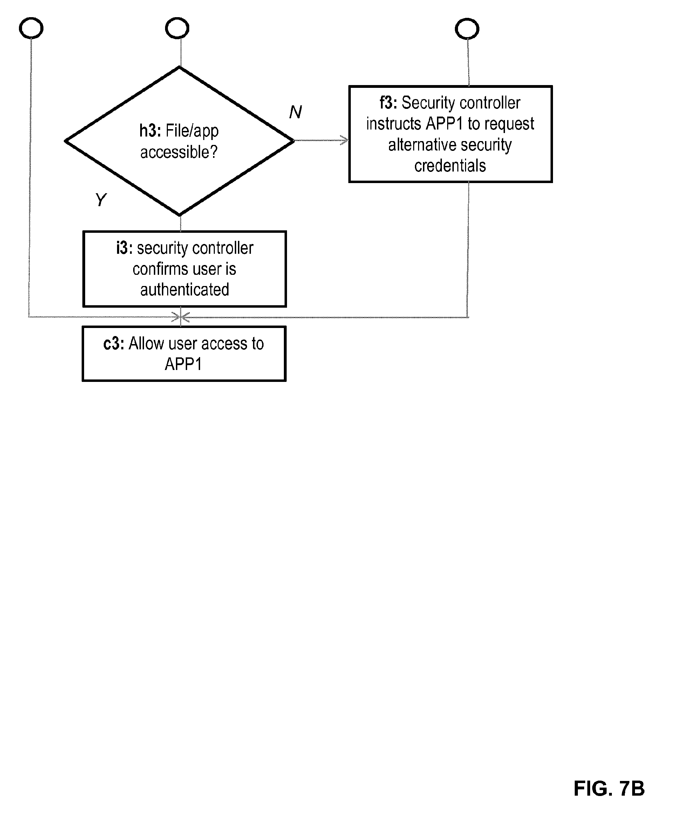

The flow chart of Figures 7A and 7B shows the procedures performed according to a third embodiment of the invention. The third embodiment of the invention correspond closely to the first embodiment. The steps of the third embodiment which are designated with the same letter as a step of the first embodiment are identical to the like designated step of the first embodiment, but with the addition of a new step g3-α, which is performed between step e3 and step g3.

That is, steps **a3, b3, c3, d3, e3, f3**, **g3**, **h3** and **i3** correspond to steps a, b, c, d, e, f, g, h and i, respectively, of the first embodiment - and will not be described again here for the sake of brevity.

However, in the third embodiment, if at step e3 it is determined that the SIM PIN is enabled, then at step **g3-**β, it is determined whether the SIM PIN is too old. For example, the time elapsed since the SIM PIN was entered may be recorded by a timer in the SIM 20 or the mobile terminal 10. When step g3-β is performed the value of this timer is compared to a threshold value. If the value of the timer is below the threshold, then the SIM PIN is determined not to be too old and step g3 can then be performed, at which the NAA 40 accesses a file or application protected by the SIM PIN in the same manner as in the first embodiment.

On the other hand, if at step g3-β it is determined that the timer value equals or exceeds the threshold, then it is determined that the SIM PIN is too old. If it is determined that the SIM PIN is too old, then the security controller 42 will not automatically authenticate the user, and, at step f3, instructs the application APP1 to request alternative security credentials. The security credentials may be entered in the conventional way as described in relation to step f3 of the first embodiment, before allowing access to the application APP1 (in step c3).

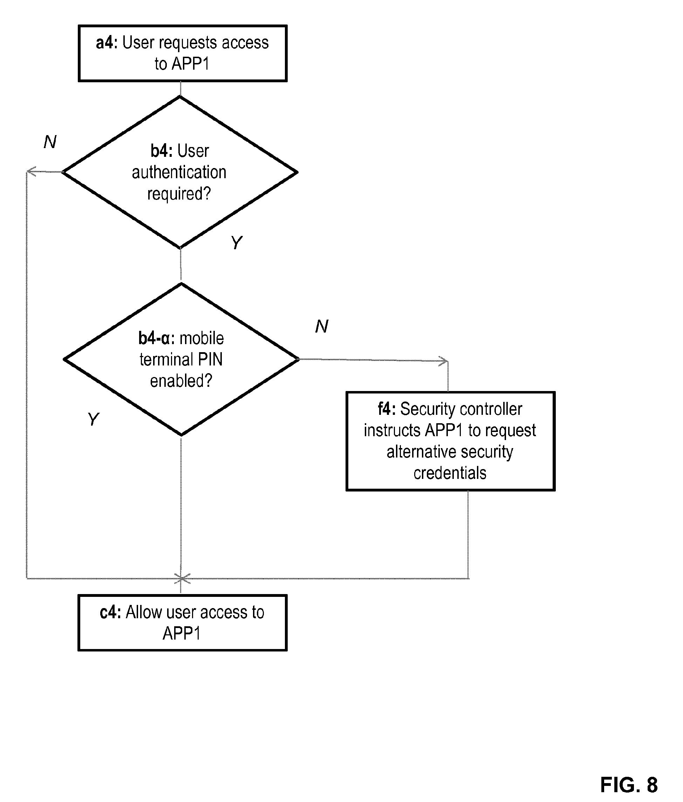

Figure 8 shows a fourth embodiment of the invention.

At **step a4** the user of the mobile terminal 10 requests access to application APP1, in the same way as step a2 of the second embodiment. This request is passed to the application processor 50. The application processor 50 then determines at **step b4** whether the application APP1 requires the user authentication before access to the application is granted, in the same manner as step b of the first embodiment.

If the application APP1 is of the type where access is not restricted, then at **step c4** the user is allowed access to the application APP1 immediately after step b2.

On the other hand, if it is determined at step b4 that user authentication is required, then, at **step b4-**α, the application processor 50 determines whether the mobile terminal 10 is PIN enabled. This is in contrast to the SIM PIN of the first embodiment. The mobile terminal PIN is administered by the mobile terminal (for example, by the security controller 42). The mobile terminal may require the PIN to be entered to use mobile terminal services and/or to access particular files and applications.

If it is determined at step b4-α that the mobile terminal PIN is enabled, then at **step c4** the user is allowed access to the application APP1 immediately after step b4.

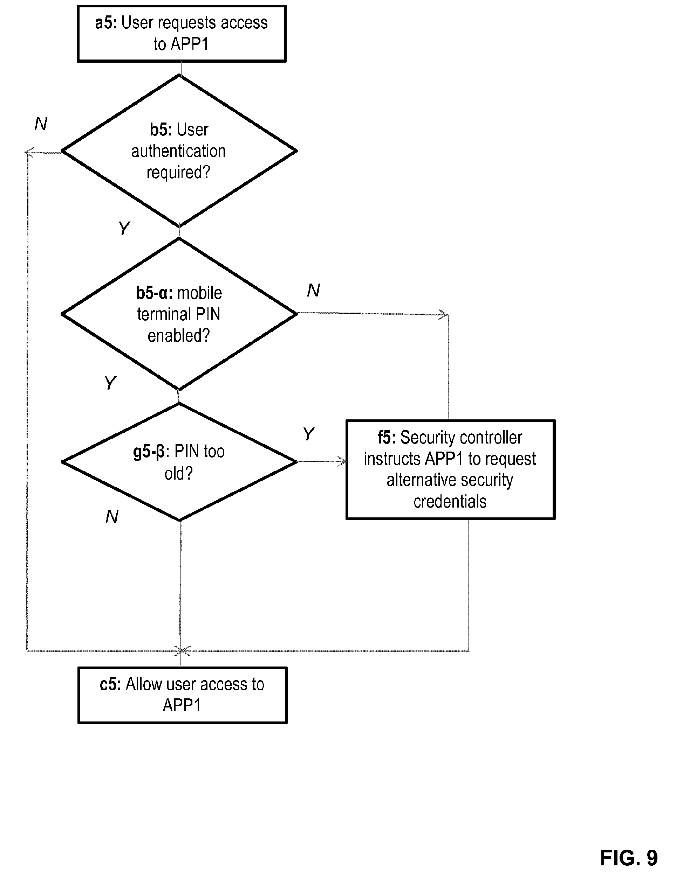

Figure 9 shows a fifth embodiment of the invention.

At **step a5** the user of the mobile terminal 10 requests access to application APP1, in the same way as step a2 of the second embodiment. This request is passed to the application processor 50. The application processor 50 then determines at **step b5** whether the application APP1 requires the user authentication before access to the application is granted, in the same manner as step b of the first embodiment.

If the application APP1 is of the type where access is not restricted, then at **step c5** the user is allowed access to the application APP1 immediately after step b2.

On the other hand, if it is determined at step b5 that user authentication is required, then, at **step b5-**α, the application processor 50 determines whether the mobile terminal 10 is PIN enabled. This is in contrast to the SIM PIN of the first embodiment. The mobile terminal PIN is administered by the mobile terminal (for example, by the security controller 42). The mobile terminal may require the PIN to be entered to use mobile terminal services and/or to access particular files and applications.

However, in the fifth embodiment, if at step b5-α it is determined that the mobile terminal PIN is enabled, then at step **g5**-β, it is determined whether the mobile terminal PIN is too old. For example, the time elapsed since the mobile terminal PIN was entered may be recorded by a timer in the mobile terminal 10. When step g5-β is performed the value of this timer is compared to a threshold value. If the value of the timer is below the threshold, then the mobile terminal PIN is determined not to be too old.

If it is determined at step g5-β that the mobile terminal PIN is not too old, then at **step c5** the user is allowed access to the application APP1.

On the other hand, if at step g5-β it is determined that the timer value equals or exceeds the threshold, then it is determined that the mobile terminal PIN is too old. If it is determined that the mobile terminal PIN is too old, then the security controller 42 will not automatically authenticate the user, and, at step f5, instructs the application APP1 to request alternative security credentials. The security credentials may be entered in the conventional way as described in relation to step f2 of the second embodiment, before allowing access to the application APP1 (in step c5).

The second and third embodiment may be modified to include a step corresponding to step g5-β of the fifth embodiment, so that the age of the mobile terminal PIN is checked.

In the modification of the third and fifth embodiments, if it is determined that the SIM PIN/phone PIN is too old at step g3- β/g5-β, instead of requiring the application APP1 to request security credentials of the user that are specific to the application (at step f3/f5), the security controller 42 may instead require the user to re-enter the SIM PIN/phone PIN. Once "refreshed" in this way, the correctly entered PIN can be considered by the security controller 42 to have satisfactorily authenticated the user so that the next step in the procedure can be step g3 in the third embodiment/step c5 in the fifth embodiment. When the PIN is re-entered, the timer mentioned about is re-set and re-started.

The mobile terminal 10 or SIM 20 may be modified to request that the user periodically re-enters their SIM PIN or phone PIN to enhance the security in the embodiments described, particularly the first, second and fourth embodiments where there is no age limit on the SIM PIN/phone PIN. In this regard, as mentioned above, it should be understood that many users may very infrequently power-cycle their mobile terminal, and so many days or weeks may pass without the SIM PIN or phone PIN being entered. The mobile terminal and/or SIM may include a timer which counts the time elapsed since the mobile terminal PIN or SIM PIN was last entered and compared this to a refresh threshold. When the timer reaches the refresh threshold, the user is prompted to re-enter the mobile terminal PIN or SIM PIN at which point the timer is reset and begins counting once again.

In a variation of this arrangement, the user may be prompted to re-enter the phone PIN or SIM PIN each time a particular feature of the mobile terminal is required by the user. Such a feature may be to unlock the screen or keyboard of the mobile device. That is, in response by a request to the user to unlock the screen or keyboard, the user is prompted to enter the mobile terminal PIN or the SIM PIN before the screen or keyboard is unlocked.

The security controller 42 may be configured to allow the application APP1 to be accessed by the user when a particular SIM 20 is associated with the mobile terminal 10. This may be done, for example, by the security controller 42 reading the IMSI from the SIM 20 and only allowing access to the application APP1 if the read IMSI matches an IMSI previously stored in the security controller 42.

The user may be prompted to enter the mobile terminal PIN by any suitable mechanism. The user may be prompted to enter the SIM PIN using one of the methods 1, 2, 3 or 4 described above, namely EAP-SIM/AKA, GBA_U, JAVA JSR-177 or core control by USIM as defined by 3GPP TS 31.111.

### ADDITIONAL EMBODIMENTS

Clause 1. A method for controlling use of an application on a mobile device, the method including determining whether a user security code is active and allowing execution of the application in dependence upon whether the user security code is determined to be active.

Clause 2. The method of clause 1, wherein the user security code comprises a Personal Identification Number, PIN.

Clause 3. The method of clause 1 or 2, wherein the user security code relates to a Subscriber Identity Module, SIM, associated with the mobile device.

Clause 4. The method of clause 3, including establishing a secure channel between the mobile device and the SIM.

Clause 5. The method of clause 3 or 4, wherein the user security code is a SIM PIN which enables the SIM to authenticate with a cellular telecommunications network.

Clause 6. The method of clause 3, 4 or 5, wherein the user security code is a JavaCard PIN.

Clause 7. The method of clause 3, 4, 5, or 6, wherein the PIN is a local PIN, global PIN or PIN 2.

Clause 8. The method of clause 3, 4, 5, 6 or 7, wherein the user security code relates to a particular SIM, the method including only allowing execution of the application when the particular SIM is associated with the mobile device.

Clause 9. The method of any one of the preceding clauses, wherein the determining step includes checking whether the user security code is required to be entered to enable a particular function and checking whether an area protected by the user security code can be accessed.

Clause 10.The method of clause 9, wherein the area comprises a file or application.

Clause 11.The method of any one of clauses 1 to 10, wherein the user security code relates to the mobile device.

Clause 12.The method of clause 11, wherein the user security code is required to unlock a feature of the mobile device.

Clause 13. The method of clause 12, wherein the feature is a display of the mobile device.

Clause 14.The method of clause 12 or 13, wherein the feature comprises a keyboard of the mobile device.

Clause 15.The method of any one of clauses 1 to 14, including determining when the user security code was entered and selectively requesting re-entry of the user security code.

Clause 16.The method clause 1 or 2, wherein the user security code relates to the mobile device, and wherein, if the user security code is determined to be inactive, the method further includes determining whether a further user security code is active, which further user security code relates to a Subscriber Identity Module, SIM, associated with the mobile device, and then allowing execution of the application in dependence upon whether the further user security code is determined to be active.

Clause 17. Apparatus for controlling use of an application on a mobile device, the apparatus including security means operable to determine whether a user security code is active and to allow execution of the application in dependence upon whether the user security code is active. Clause 18. The apparatus of clause 17, wherein the user security code comprises a Personal Identification Number, PIN.

Clause 19. The apparatus of clause 17 or 18, wherein the user security code relates to a Subscriber Identity Module, SIM, associated with the mobile device.

Clause 20. The apparatus of clause 19, including means operable to establish a secure channel between the mobile device and the SIM.

Clause 21. The apparatus of clause 19 or 20, wherein the user security code is a SIM PIN which enables the SIM to authenticate with a cellular telecommunications network.

Clause 22. The apparatus of clause 19, 20 or 21, wherein the user security code is a JavaCard PIN.

Clause 23. The apparatus of clause 19, 20, 21 or 22, wherein the PIN is a local PIN, global PIN or PIN 2.

Clause 24. The apparatus of clause 19, 20, 21, 22 or 23, wherein the user security code relates to a particular SIM, and including means operable to only allow execution of the application when the particular SIM is associated with a mobile device.

Clause 25. The apparatus of any one of clauses 17 to 24, wherein the security means is operable to check whether the user security code is required to be entered to enable a particular function and to check whether an area protected by the user security code can be accessed.

Clause 26. The apparatus of clause 25, wherein the area comprises a file or application.

Clause 27. The apparatus of any one of clauses 17 to 26, wherein the user security code relates to the mobile device.

Clause 28. The apparatus of clause 27, wherein the user security code is required to unlock a feature of the mobile device.

Clause 29. The apparatus of clause 28, wherein the feature is a display of the mobile device.

Clause 30. The apparatus of clause 28 or 29, wherein the feature comprises a keyboard of the mobile device.

Clause 31. The apparatus of any one of clauses 16 to 29, wherein the security means is operable to determine when the user security code was entered and to selectively request re-entry of the user security code.

Clause 32.The apparatus of clause 17 or 18, wherein the user security code relates to the mobile device, and wherein, if the user security code is determined to be inactive, the security means is further operable to determine whether a further user security code is active, which further user security code relates to a Subscriber Identity Module, SIM, associated with the mobile device, and to allow execution of the application in dependence upon whether the further user security code is determined to be active.

Clause 33. A method of controlling use of an application on a mobile device, substantially as hereinbefore described with reference to and/or substantially as illustrated in any one of or any combination of the accompanying drawings.

Clause 34. Apparatus for controlling use of an application on a mobile device, substantially as hereinbefore described with reference to and/or substantially as illustrated in any one of or any combination of the accompanying drawings.

## Claims

1. A method for controlling use of an application on a mobile device, the method including determining whether a user security code is active and allowing execution of the application in dependence upon whether the user security code is determined to be active.

2. The method of claim 1, wherein the user security code comprises a Personal Identification Number, PIN.

3. The method of claim 1 or 2, wherein the user security code relates to a Subscriber Identity Module, SIM, associated with the mobile device.

4. The method of claim 3, including establishing a secure channel between the mobile device and the SIM.

5. The method of claim 3 or 4, wherein the user security code is a SIM PIN which enables the SIM to authenticate with a cellular telecommunications network.

6. The method of claim 3, 4 or 5, wherein the user security code is a JavaCard PIN.

7. The method of claim 3, 4, 5, or 6, wherein the PIN is a local PIN, global PIN or PIN 2.

8. The method of claim 3, 4, 5, 6 or 7, wherein the user security code relates to a particular SIM, the method including only allowing execution of the application when the particular SIM is associated with the mobile device.

9. The method of any one of the preceding claims, wherein the determining step includes checking whether the user security code is required to be entered to enable a particular function and checking whether an area protected by the user security code can be accessed, wherein the area preferably comprises a file or application.

10. The method of any one of claims 1 to 9, wherein the user security code relates to the mobile device.

11. The method of claim 10, wherein the user security code is required to unlock a feature of the mobile device, wherein the the feature is preferably a display of the mobile device.

12. The method of claim 10 or 11, wherein the feature comprises a keyboard of the mobile device.

13. The method of any one of claims 1 to 12, including determining when the user security code was entered and selectively requesting re-entry of the user security code.

14. The method claim 1 or 2, wherein the user security code relates to the mobile device, and wherein, if the user security code is determined to be inactive, the method further includes determining whether a further user security code is active, which further user security code relates to a Subscriber Identity Module, SIM, associated with the mobile device, and then allowing execution of the application in dependence upon whether the further user security code is determined to be active.

15. Apparatus for controlling use of an application on a mobile device, the apparatus including security means operable to determine whether a user security code is active and to allow execution of the application in dependence upon whether the user security code is active.
